# FASCICULE DE BREVET EUROPEEN

(11) **EP 2 397 413 B1**
(45) Date de publication et mention de la délivrance du brevet: **22.08.2012**
(21) Numéro de dépôt: 10305654.5
(22) Date de dépôt: 18.06.2010
(51) Int. Cl.: B65B 43/44, B65G 59/10

(54) **Procédé et dispositif de dépilage de barquettes**
Verfahren und Vorrichtung zum Abstapeln von Schalen
Method and device for destacking trays

(43) Date de publication de la demande: 21.12.2011
(73) Titulaire: Groupe Guillin, 25290 Ornans (FR)
(72) Inventeur: Guillin, François, 25920 Mouthier-Haute-Pierre (FR)
(74) Mandataire: Littolff, Denis

(56) Documents cités:
- EP-A2- 1 275 604
- FR-A1- 2 858 603
- GB-A- 689 530
- GB-A- 1 391 721
- JP-A- 07 010 287
- US-A- 4 741 458
- US-A- 5 067 308

## Description

La présente invention a trait à un procédé et à un dispositif de dépilage de barquettes, notamment pour permettre aux dites barquettes d'être dirigées individuellement vers une ligne de conditionnement en vue de leur remplissage.

Ces barquettes, usuellement fabriquées en plastique thermoformé, sont à usage multiple, par exemple utilisées comme emballage pour des plats cuisinés ou plus généralement pour des aliments préparés à l'avance pour la vente. Les produits conditionnés dans ces barquettes sont notamment prévus pour être présentés et disposés dans des rayons de supermarché.

Les opérations effectuées sur la ligne de conditionnement consistent alors à remplir individuellement les barquettes (salades, nourriture précuisinée...) et le cas échéant à les operculer, par exemple par filmage plastique.

L'invention, mise en oeuvre avant la phase de remplissage, permet de réaliser le passage de l'état de stockage des barquettes, généralement sous forme de piles très serrées pour optimiser la gestion de l'espace et répondre à des nécessités économiques, à leur individualisation en vue de l'emballage des produits. Le dépilage permet en pratique d'alimenter séquentiellement en barquettes individualisées la ligne de conditionnement.

Historiquement, l'individualisation des barquettes par extraction d'une pile était techniquement facile à réaliser parce que lesdites barquettes n'étaient pas empilées serrées mais au contraire relativement espacées, un espacement de quelques millimètres étant préservé entre elles. Les coûts actuels du transport, et plus généralement de l'espace, ont rendus ces modes de stockage obsolètes.

Les barquettes sont à présent dessinées pour pouvoir être empilées ou gerbées de manière serrée, c'est-à-dire dans la mesure du possible fond contre fond et bord contre bord en vue d'un gain d'espace maximal, autant pour le transport que pour le stockage. Il ne subsiste plus d'espacement entre deux barquettes successives. L'opération de dépilage, consistant en pratique à prélever une seule barquette de la pile serrée, est devenue dès lors bien plus difficile à mettre en oeuvre, l'extraction individualisée des barquettes étant de surcroît intégrée à un process automatisé requérant un fonctionnement fiable et de durée constante.

La présente invention propose une solution originale et techniquement élégante, notamment par la simplification de la structure technique qu'elle requiert, à ce problème d'individualisation, sous la double forme d'un procédé et d'un dispositif de dépilage de barquettes. Ces dernières comportent en l'espèce un rebord périphérique par exemple sous forme d'une collerette périphérique qui dépasse vers l'extérieur, dont la forme est également variable selon les barquettes.

L'un des points importants à résoudre dans le cadre de la problématique posée ci-dessus réside dans le fait que les piles à partir desquelles l'individualisation des barquettes doit être effectuée présentent un nombre variable de barquettes, dépendant notamment des modalités de stockage et/ou d'approvisionnement de la chaîne automatisée réalisant le conditionnement des produits à l'intérieur des barquettes.

En premier lieu, le procédé de dépilage de l'invention se caractérise à titre essentiel en ce qu'il comporte les étapes suivantes :
- pose de la pile orientée verticalement sur un support inférieur amovible ;
- soulèvement d'une fraction supérieure de la pile de manière à constituer une fraction inférieure comprenant toujours le même nombre de barquettes ;
- injection d'air entre les deux barquettes les plus basses de la fraction inférieure de la pile pour les décoller ;
- insertion de taquets amovibles pour supporter la barquette surmontant la barquette inférieure de la pile ;
- escamotage du support inférieur amovible ;
- injection d'air entre les deux barquettes les plus basses pour éjecter la barquette inférieure ;
- remise en place du support inférieur amovible ;
- escamotage des taquets amovibles ; et
- regroupement des fractions inférieure et supérieure de la pile.

Un des avantages prépondérants de l'invention réside dans l'utilisation d'air comprimé. Les flux d'air requis, faciles à mettre en oeuvre, rendent inutile l'utilisation d'éléments mécaniques sophistiqués de dépilation tels que des ventouses ou autres systèmes à vides utilisés dans le passé pour retirer la barquette la plus basse de la pile.

De telles configurations techniques, nécessitant dans nombre de cas des réglages et des opérations de mise au point, augmentent la complexité du système automatisé, avec une incidence souvent négative sur la fiabilité de l'ensemble.

L'utilisation d'air rend par ailleurs possible le décollement de barquettes empilées très serrées et de profils très différents, en permettant précisément de s'affranchir de toute forme de configuration mécanique précise pour écarter deux barquettes étroitement gerbées.

Dans une première phase d'injection d'air, les deux barquettes les plus basses sont décollées par établissement d'un coussin d'air entre elles, pour permettre ensuite la mise en place d'éléments mécaniques de séparation.

Dans la seconde phase, la fonction de l'injection d'air est différente, le soufflage visant en l'espèce à faire tomber la barquette inférieure, retenue à la pile par les contraintes de frottement entre surfaces des barquettes même lorsque le gerbage n'est pas total, leur poids unitaire étant trop faible pour surpasser les contraintes de frottement. Le coussin d'air injecté entre les barquettes exerce une force régulièrement répartie sur toute la surface interne de la barquette, permettant son éjection vers le convoyeur dans les meilleures conditions, c'est-à-dire dans une direction maîtrisée la plus verticale possible.

L'orientation, le débit et la pression générés par les jets, voire la vitesse du fluide, ne sont pas forcément identiques dans les deux phases et sont réglables par le système, en particulier selon la forme et le poids des barquettes.

L'un des principes directeurs de l'invention consiste donc à recourir à l'emploi de techniques issues de la mécanique des fluides plutôt que de la mécanique classique pour résoudre des problématiques ponctuelles, le caractère adaptable de ces techniques étant appréciable dans un contexte dont les paramètres techniques (poids et formes des barquettes...) peuvent changer d'un produit à l'autre, comme c'est le cas dans l'invention.

Le procédé de l'invention comporte par ailleurs de préférence une mesure de la quantité de barquettes de la pile, et l'arrêt des opérations pour recharger la pile s'il y a lieu, lorsque ladite quantité passe sous un seuil prédéterminé.

Compte tenu de l'appartenance du système de dépilage à un ensemble automatisé comportant une ligne de conditionnement, il est en effet nécessaire de procéder à une alimentation régulière de la ligne de conditionnement en barquettes individualisées, d'où la nécessité de cette mesure en amont, visant à garantir l'existence des barquettes et à éviter l'interruption intempestive de la chaîne.

Le procédé de séparation permettant le dépilage est notamment basé sur des déplacements séquentiels de taquets, supports ou séparateurs latéraux amovibles, couplés à des projections d'air sous pression pour mettre en oeuvre des variations temporaires dans la répartition des barquettes dans la pile aux fins du dépilage de la barquette la plus basse.

Le procédé tel que décrit auparavant est mis en oeuvre dans le cadre de l'invention par un dispositif de dépilage qui se caractérise à titre essentiel en ce qu'il comporte :
- un support inférieur amovible sur lequel repose la pile de barquettes ;
- des moyens mécaniques de séparation et de soulèvement d'une fraction supérieure de la pile de barquettes préservant un nombre constant de barquettes dans la fraction inférieure de la pile ;
- des moyens d'injection d'air dans la barquette la plus basse de la pile ;
- des moyens mécaniques de support temporaire de la barquette surmontant la barquette la plus basse de la pile.

Comme on l'a vu auparavant, les moyens d'injection d'air s'exercent à deux reprises, d'une part pour permettre aux moyens mécaniques de support temporaire de l'avant-dernière barquette d'être mis en place et d'autre part, lorsqu'ils sont opérationnels, pour permettre l'éjection de la dernière barquette après escamotage du support inférieur amovible.

Les barquettes et leur rebord pouvant prendre des formes très variées, il est difficile sinon impossible de prévoir des moyens purement mécaniques s'adaptant à des formes très différentes sans qu'il soit nécessaire de les changer. Ainsi, les rebords peuvent par exemple être plans ou recourbés, ce qui nécessiterait un mode opératoire mécanique différent pour séparer deux barquettes empilées. D'où l'usage de moyens relevant de la mécanique des fluides, par essence indépendants des formes, pour préparer le positionnement des barquettes à l'intervention de moyens mécaniques plus standards.

Selon une possibilité, les moyens mécaniques de séparation et de soulèvement d'une fraction supérieure de la pile de barquettes consistent en au moins deux séparateurs latéraux disposés de part et d'autre de la pile, présentant des extrémités libres aptes à se glisser entre les rebords plans de deux barquettes successives, et qui sont entraînés par des moyens moteurs aboutissant à déplacer séquentiellement lesdits séparateurs latéraux selon une première direction perpendiculaire à l'axe de la pile et selon un second mouvement permettant à la fraction supérieure de la pile d'être déplacée parallèlement audit axe.

La fonction principale de ces moyens mécaniques de séparation et de soulèvement est de mettre en place des conditions de fonctionnement constantes pour l'opération de dépilage, en s'affranchissant de la variabilité de la hauteur, et donc du poids, de la pile. Ainsi, la fraction inférieure de la pile qui est la seule impliquée dans le processus de dépilage offre une structure constante, permettant de pérenniser les paramétrages du fonctionnement et améliorant de ce fait la fiabilité du procédé.

De même, selon une configuration possible, le support inférieur amovible peut être constitué d'au moins deux volets latéraux disposés coulissants de part et d'autre de la pile, sur les extrémités libres desquels le rebord de la barquette la plus basse repose, et qui sont entraînés par des moyens moteurs dans une direction perpendiculaire à l'axe de la pile entre deux positions respectivement de libération et de support de la dernière barquette de la pile.

Ces taquets latéraux sont, comme on l'a vu, escamotés en fin de procédé de dépilage, juste avant la seconde phase d'injection d'air qui permet d'éjecter la barquette inférieure de la pile.

Celle-ci tombe, par gravité, sur la ligne de conditionnement, à intervalles réguliers puisque les durées de chaque phase du procédé de dépilage sont elles-mêmes constantes.

Enfin, les moyens mécaniques de support temporaire de la barquette surmontant la barquette la plus basse de la pile consistent en au moins deux séparateurs latéraux disposés coulissants de part et d'autre de la pile, qui sont entraînés par des moyens moteurs dans une direction perpendiculaire à l'axe de la pile entre deux positions respectivement de libération et de support de la barquette située au dessus de la barquette la plus basse de la pile.

En fait, plus précisément, les séparateurs et volets latéraux consistent en des taquets entraînés par des moyens moteurs. Selon une possibilité, ces taquets ont une forme similaire, malgré leur fonction différente selon leur positionnement par rapport à la pile de barquettes.

Par ailleurs, selon l'invention, les moyens d'injection d'air peuvent prendre diverses configurations. Ils peuvent ainsi consister en deux tubes latéraux comportant chacun des orifices débouchant au dessus du rebord de la barquette la plus basse de la pile. Alternativement, il peut s'agir de buses spécifiques de divers calibres, de soufflettes etc... dont le positionnement est réglable en fonction de la forme des barquettes.

Les flux d'air sont par ailleurs réglables par gestion des paramètres du type pression, direction, vitesse etc... par les moyens de traitement informatiques du dispositif, par exemple par un ordinateur attaché au système.

Enfin, selon une possibilité, la pile de barquettes peut être maintenue verticale par des guides latéraux.

L'un des points essentiels de l'invention réside dans la partition effectuée dans la pile initiale de barquettes, permettant la mise en oeuvre d'un système mécanique simplifié utilisant des projections d'air. Le poids largement réduit de la fraction inférieure de la pile permet la mise en oeuvre d'un tel système, qui ne serait pas possible en présence du poids bien supérieur présenté par la pile complète. Il serait alors nécessaire de mettre en oeuvre une structure mécanique beaucoup plus compliquée, économiquement beaucoup plus onéreuse à la fabrication et à l'entretien, et rendant le dépilage sensiblement moins fiable.

L'invention va à présent être décrite en référence aux figures annexées, pour lesquelles :
- la figure 1 représente schématiquement une pile de barquettes en phase de mise en place dans le dispositif de dépilage de l'invention ;
- la figure 2 montre ladite pile en position initiale, avant le début de l'opération de dépilage ;
- la figure 3 illustre la phase de partition de la pile en une fraction supérieure et une fraction inférieure de poids constant ;
- la figure 4 représente la séparation par flux d'air de la dernière barquette ;
- les figures 5 et 6 montrent la séparation mécanique de la dernière barquette ;
- la figure 7 montre la libération de la dernière barquette de la pile ;
- la figure 8 représente l'éjection de ladite dernière barquette ; et
- les figures 9a à 9c illustrent la réinitialisation du dispositif de dépilage de l'invention, c'est-à-dire le retour à l'état initial de la pile tel que représenté en figure 2.

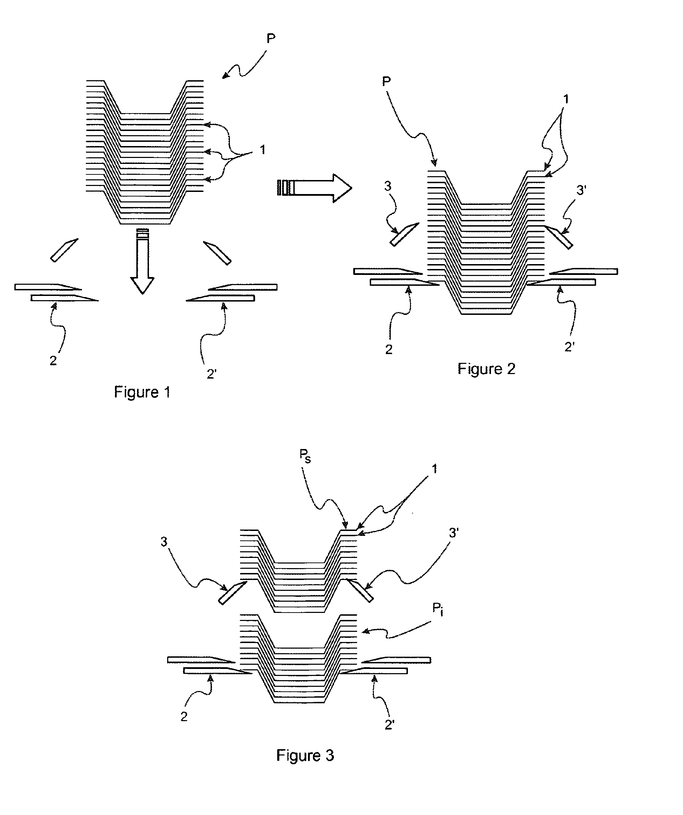

En référence à la figure 1, la pile (P) de barquettes (1) est déposée par un opérateur en charge du dépileur sur des taquets (2, 2') formant support inférieur amovible, lesdites barquettes (1) étant guidées par des guides verticaux (non représentés) dans le dispositif de l'invention.

Dans l'hypothèse de la figure 2, représentant la pile (P) déposée sur lesdits taquets (2, 2'), le poids de la totalité des barquettes (1) de la pile (P) représentée est supporté par les taquets (2, 2'). Ce poids est variable, et dépend du nombre de barquettes (1) de la pile (P).

Afin de limiter les efforts sur lesdits taquets (2, 2'), et surtout d'assurer des conditions de fonctionnement constantes, la pile (P) est divisée en deux à l'aide de séparateurs (3, 3') qui soulèvent en pratique une fraction supérieure (Ps) de ladite pile (P). Après cette opération, le nombre de barquettes constituant la fraction inférieure (Pi) de la pile est toujours le même, quelle que soit la hauteur de la pile (P) de départ.

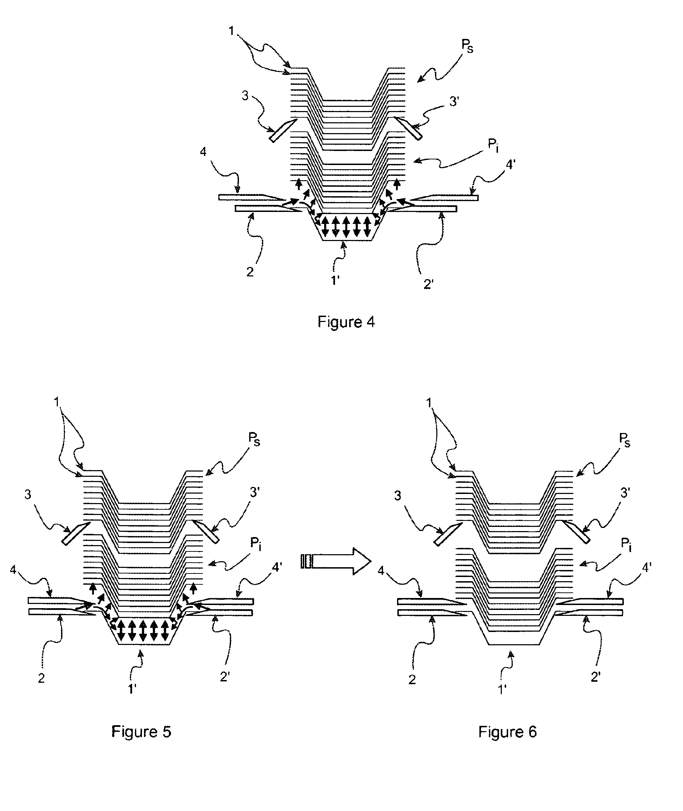

Des buses de soufflage (non représentées) injectent ensuite de l'air comprimé dans la barquette la plus basse (1'), comme cela est représenté en figure 4 par les flèches noires, le flux d'air pénétrant en pratique entre la barquette la plus basse de la pile (1') et celle qui la surmonte pour les décoller. Les flux d'air sont dès lors orientés à la fois vers le haut et vers le bas, la fonction à remplir étant d'écarter les barquettes. La dernière barquette (1') étant en contact avec les taquets (2, 2'), et rien ne s'opposant à un déplacement vers le haut des autres barquettes (1) empilées de la fraction inférieure (Pi) de la pile (P), l'air injecté créé une surpression entre les deux dernières barquettes de la pile (P), qui a pour conséquence de soulever lesdites autres barquettes de la pile inférieure (Pi), ainsi que cela apparaît en figure 4, et de créer un espacement entre les deux barquettes (1) les plus basses.

Les séparateurs (4, 4') sont alors actionnés vers le centre (voir en figure 5), c'est-à-dire vers l'axe de la pile, de sorte que, quand la pile intermédiaire créée au dessus de la barquette inférieure (1') retombe, comme représenté en figure 6, elle repose sur ces séparateurs (4, 4').

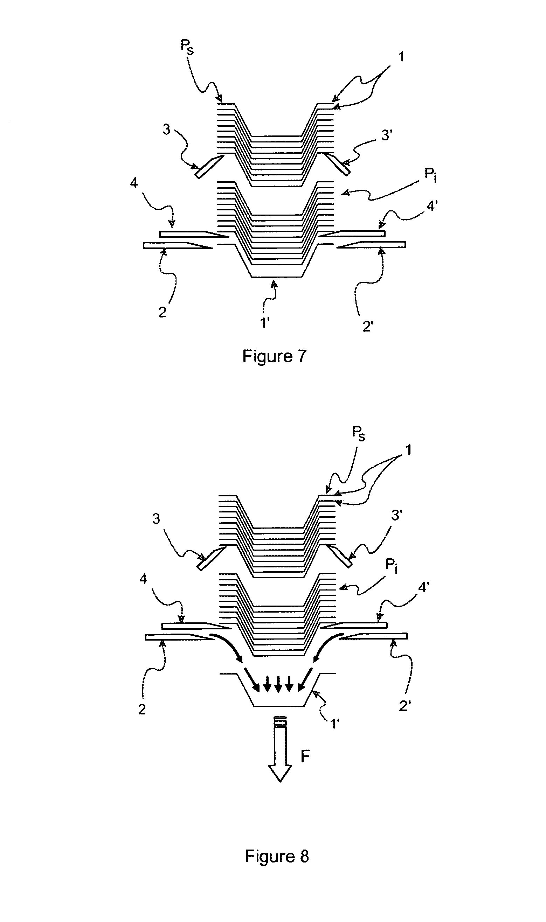

A l'étape suivante, représentée en figure 7, les taquets supports inférieurs (2, 2') soutenant la barquette la plus basse (1') sont soumis à un déplacement de sens inverse, libérant la dernière barquette (1') de la pile. La barquette (1') ainsi libérée peut être éjectée vers le convoyeur, ce qui est réalisé par l'injection d'un nouveau flux (flèches noires) par les buses d'injection (voir en figure 8)). Cette fois, les flux sont orientés vers le bas, puisqu'il s'agit en l'espèce d'expulser la dernière barquette vers le bas pour la faire tomber.

La dernière barquette (1'), libre de toute retenue mécanique, est soumise à une sollicitation mécanique résultant du débit d'air entrant correctement orienté, qui provoque son éjection vers le bas sous le double effet de son poids et de la pression de l'air, vers la ligne de conditionnement, dans la direction de la flèche blanche (F).

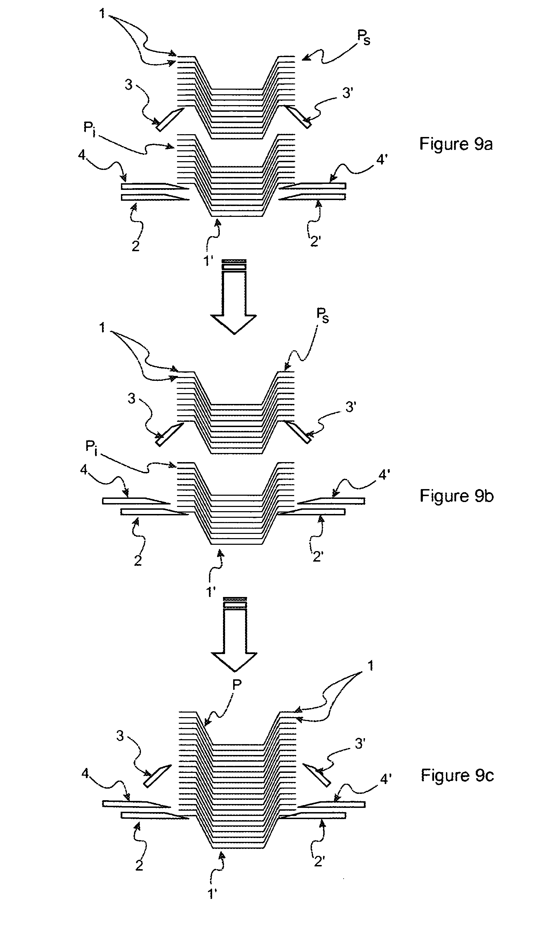

Le système revient ensuite à sa configuration initiale, comme cela est illustré dans les figures 9a à 9c, lorsque les taquets (2, 2') reprennent leur position de soutien inférieur (figure 9a), puis que les séparateurs (4, 4') sont redéplacés vers l'extérieur (figure 9b), et enfin que les séparateurs (3, 3') en charge de soulever la fraction supérieure (Ps) de la pile (P) reprennent leur position initiale, permettant à ladite fraction (Ps) de redescendre au contact de la fraction inférieure (Pi) pour reconstituer la pile (P) complète.

On se retrouve dans la configuration initiale, c'est-à-dire celle de la figure 2, et le cycle de dépilage visant à individualiser les différentes barquettes en vue des opérations prenant place sur la ligne de conditionnement peut reprendre.

## Revendications

1. Procédé de dépilage de barquettes (1) à rebords périphériques constituées en pile (P) comprenant un nombre aléatoire de barquettes (1), **caractérisé en ce qu'**il comporte les étapes suivantes :
- pose de la pile (P) orientée verticalement sur un support inférieur (2, 2') amovible ;
- soulèvement d'une fraction supérieure (Ps) de la pile (P) de manière à constituer une fraction inférieure (Pi) comprenant toujours le même nombre de barquettes (1) ;
- injection d'air entre les deux barquettes (1, 1') les plus basses de la fraction inférieure (Pi) de la pile (P) pour les décoller ;
- insertion de taquets amovibles (4, 4') pour supporter la barquette (1) surmontant la barquette inférieure (1') de la pile (P) ;
- escamotage du support inférieur (2, 2') amovible ;
- injection d'air entre les deux barquettes (1, 1') les plus basses pour éjecter la barquette inférieure (1') ;
- remise en place du support inférieur (2, 2') amovible ;
- escamotage des taquets amovibles (4, 4') ; et
- regroupement des fractions inférieure (Pi) et supérieure (Ps) de la pile (P).

2. Procédé de dépilage de barquettes (1) selon la revendication précédente, **caractérisé en ce qu'**il comporte la mesure de la quantité de barquettes (1) de la pile (P) et l'arrêt des opérations pour recharger la pile (P) lorsque ladite quantité passe sous un seuil prédéterminé.

3. Dispositif de dépilage de barquettes (1) pour la mise en oeuvre du procédé selon les revendications précédentes, **caractérisé en ce qu'**il comporte :
- un support inférieur (2, 2') amovible sur lequel repose la pile (P) de barquettes (1) ;
- des moyens mécaniques (3, 3') de séparation et de soulèvement d'une fraction supérieure (Ps) de la pile (P) de barquettes (1) préservant un nombre constant de barquettes (1) dans la fraction inférieure (Pi) de la pile (P) ;
- des moyens d'injection d'air dans la barquette (1') la plus basse de la pile (P) ;
- des moyens mécaniques (4, 4') de support temporaire de la barquette (1) surmontant la barquette (1') la plus basse de la pile (P).

4. Dispositif de dépilage de barquettes (1) selon la revendication précédente, **caractérisé en ce que** les moyens mécaniques (3, 3') de séparation et de soulèvement d'une fraction supérieure (Ps) de la pile (P) de barquettes (1) consistent en au moins deux séparateurs latéraux (3, 3') disposés de part et d'autre de la pile (P), présentant des extrémités libres aptes à se glisser entre les rebords plans de deux barquettes (1) successives, et qui sont entraînés par des moyens moteurs aboutissant à déplacer séquentiellement lesdits séparateurs latéraux (3, 3') selon une première direction perpendiculaire à l'axe de la pile (P) et selon un second mouvement permettant à la fraction supérieure (Ps) de la pile (P) d'être déplacée parallèlement audit axe.

5. Dispositif de dépilage de barquettes (1) selon l'une des revendications 3 et 4, **caractérisé en ce que** le support inférieur (2, 2') amovible peut être constitué d'au moins deux volets latéraux (2, 2') disposés coulissants de part et d'autre de la pile (P), sur les extrémités libres desquels le rebord de la barquette la plus basse (1') repose, et qui sont entraînés par des moyens moteurs dans une direction perpendiculaire à l'axe de la pile (P) entre deux positions respectivement de libération et de support de la dernière barquette (1') de la pile (P).

6. Dispositif de dépilage de barquettes (1) selon l'une des revendications 3 à 5, **caractérisé en ce que** les moyens mécaniques (4, 4') de support temporaire de la barquette (1) surmontant la barquette la plus basse (1') de la pile (P) consistent en au moins deux séparateurs latéraux (4, 4') disposés coulissants de part et d'autre de la pile (P), qui sont entraînés par des moyens moteurs dans une direction perpendiculaire à l'axe de la pile (P) entre deux positions respectivement de libération et de support de la barquette (1) située au dessus de la barquette la plus basse (1') de la pile (P).

7. Dispositif de dépilage de barquettes (1) selon l'une des revendications 3 à 6, **caractérisé en ce que** les séparateurs et volets latéraux consistent en des taquets (2, 2' ; 4, 4') entraînés par des moyens moteurs.

8. Dispositif de dépilage de barquettes (1) selon l'une des revendications 3 à 7, **caractérisé en ce que** les moyens d'injection de l'air consistent en deux tubes latéraux comportant chacun des orifices débouchant au dessus du rebord de la barquette la plus basse (1') de la pile (P).

9. Dispositif de dépilage de barquettes (1) selon l'une des revendications 3 à 7, **caractérisé en ce que** les moyens d'injection de l'air consistent en des buses dont le positionnement est réglable en fonction de la forme des barquettes (1).

10. Dispositif de dépilage de barquettes (1) selon l'une des revendications 3 à 7, **caractérisé en ce que** les moyens d'injection de l'air consistent en des soufflettes dont le positionnement est réglable en fonction de la forme des barquettes (1).

11. Dispositif de dépilage de barquettes (1) selon l'une des revendications 3 à 10, **caractérisé en ce qu'**il comporte des moyens informatiques aptes à gérer la variation des paramètres des flux d'air du type pression, direction et vitesse.

12. Dispositif de dépilage de barquettes (1) selon l'une des revendications 3 à 11, **caractérisé en ce que** la pile (P) de barquettes (1) est maintenue verticale par des guides latéraux.

## Claims

1. A method for unstacking trays (1) with peripheral edges, forming a stack (P) comprising a random number of trays (1), **characterized in that** it includes the following steps:
- laying the stack (P) oriented vertically on a removable lower support (2, 2');
- lifting an upper fraction (Ps) of the stack (P) so as to form a lower fraction (Pi) always comprising the same number of trays (1);
- injecting air between both lowest trays (1, 1') of the lower fraction (Pi) of the stack (P) in order to detach them;
- inserting removable cleats (4, 4') for supporting the tray (1) surmounting the lower tray (1') of the stack (P);
- retracting the removable lower support (2, 2');
- injecting air between both lowest trays (1, 1') for ejecting the lower tray (1');
- re-placing the removable lower support (2, 2');
- retracting the removable cleats (4, 4'); and
- re-grouping the lower (Pi) and upper (Ps) fractions of the stack (P).

2. The method for unstacking trays (1) according to the preceding claim, **characterized in that** it includes the measurement of the amount of trays (1) of the stack (P) and the stopping of the operations for re-loading the stack (P) when said amount passes under a predetermined threshold.

3. A device for unstacking trays (1) for applying the method according to the preceding claims, **characterized in that** it includes:
- a removable lower support (2, 2') on which rests the stack (P) of trays (1);
- mechanical means (3, 3') for separating and lifting an upper fraction (Ps) of the stack (P) of trays (1) while keeping a constant number of trays (1) in the lower fraction (Pi) of the stack (P);
- means for injecting air into the lowest tray (1') of the stack (P);
- mechanical means (4, 4') for temporarily supporting the tray (1) surmounting the lowest tray (1') of the stack (P).

4. The device for unstacking trays (1) according to the preceding claim, **characterized in that** the mechanical means (3, 3') for separating and lifting an upper fraction (Ps) of the stack (P) of trays (1), consist in at least two side separators (3, 3') positioned on either side of the stack (P), having free ends capable of sliding between the planar edges of two successive trays (1), and which are driven by driving means resulting in sequential displacement of said side separators (3, 3') along a first direction perpendicular to the axis of the stack (P) and according to a second movement allowing the upper fraction (Ps) of the stack (P) to be displaced parallel to said axis.

5. The device for unstacking trays (1) according to one of claims 3 and 4, **characterized in that** the removable lower support (2, 2') may consist of at least two side flaps (2, 2') slidably positioned on either side of the stack (P), on the free ends of which the edge of the lowest tray (1') rests, and which are driven by driving means in a direction perpendicular to the axis of the stack (P) between two positions for respectively releasing and supporting the last tray (1') of the stack (P).

6. The device for unstacking trays (1) according to one of claims 3 to 5, **characterized in that** the mechanical means (4, 4') for temporarily supporting the tray (1) surmounting the lowest tray (1') of the stack (P) consist in at least two side separators (4, 4') slidably positioned on either side of the stack (P), which are driven by driving means in a direction perpendicular to the axis of the stack (P) between the two positions for respectively releasing and supporting the tray (1) located above the lowest tray (1') of the stack (P).

7. The device for unstacking trays (1) according to one of claims 3 to 6, **characterized in that** the separators and side flaps consist in cleats (2, 2'; 4, 4') driven by driving means.

8. The device for unstacking trays (1) according to one of claims 3 to 7, **characterized in that** the air injection means consist in two side tubes, each including orifices opening out above the edge of the lowest tray (1') of the stack (P).

9. The device for unstacking trays (1) according to one of claims 3 to 7, **characterized in that** the air injection means consists in nozzles, the positioning of which is adjustable depending on the shape of the trays (1).

10. The device for unstacking trays (1) according to one of claims 3 to 7, **characterized in that** the air injection means consists in blow guns, the positioning of which is adjustable depending on the shape of the trays (1).

11. The device for unstacking trays (1) according to one of claims 3 to 10, **characterized in that** it includes computerized means capable of handling the variation of the airflow parameters of the pressure, direction and velocity type.

12. The device for unstacking trays (1) according to one of claims 3 to 11, **characterized in that** the stack (P) of trays (1) is held vertical by side guides.

## Patentansprüche

1. Verfahren zum Entstapein von Schalen (1) mit peripheren Rändern, die einen Stapel (P) bilden und eine beliebige Anzahl von Schalen (1) umfassen, **dadurch gekennzeichnet, dass** es die folgenden Schritte umfasst:
- Stellen des vertikal ausgerichteten Stapels (P) auf eine bewegbare untere Unterlage (2, 2'),
- derartiges Anheben eines oberen Teils (Ps) des Stapels (P), dass ein unterer Teil (Pi) gebildet wird, der immer dieselbe Anzahl von Schalen (1) umfasst,
- Einblasen von Luft zwischen die zwei untersten Schalen (1, 1') des unteren Teils (Pi) des Stapels (P), um sie zu lösen,
- Einführen von bewegbaren Keilen (4, 4'), um die Schale (1) über der unteren Schale (1') des Stapels (P) aufzunehmen,
- Einziehen der bewegbaren untere Unterlage (2, 2'),
- Einblasen von Luft zwischen die zwei untersten Schalen (1, 1'), um die untere Schale (1') auszuwerfen,
- erneutes Platzieren der bewegbaren unteren Unterlage (2, 2'),
- Einziehen der bewegbaren Keile (4, 4') und
- erneute Gruppierung des unteren (Pi) und oberen (Ps) Teils des Stapels (P).

2. Verfahren zum Entstapeln von Schalen (1) nach vorangehendem Anspruch, **dadurch gekennzeichnet, dass** es das Messen der Menge von Schalen (1) des Stapels (P) aufweist und das Anhalten der Vorgänge, um den Stapel (P) nachzufüllen, wenn die Menge unter eine vorbestimmte Schwelle fällt.

3. Vorrichtung zum Entstapeln von Schalen (1) zur Umsetzung des Verfahrens nach einem der vorangehenden Ansprüche, **dadurch gekennzeichnet, dass** sie aufweist:
- eine bewegbare untere Unterlage (2, 2'), auf der der Stapel (P) von Schalen (1) ruht,
- mechanische Mittel (3, 3') zum Trennen und Anheben eines oberen Teils (Ps) des Stapel (P) von Schalen (1), wobei eine konstante Anzahl von Schalen (1) im unteren Teil (Pi) des Stapels (P) erhalten bleibt,
- Mittel zum Einblasen von Luft in die unterste Schale (1') des Stapels (P),
- mechanische Mittel (4, 4') zum zeitlich vorübergehenden Halten der Schale (1) über der untersten Schale (1') des Stapels (P).

4. Vorrichtung zum Entstapeln von Schalen (1) nach vorangehendem Anspruch, **dadurch gekennzeichnet, dass** die mechanischen Mittel (3, 3') zum Trennen und Anheben eines oberen Teils (Ps) des Stapel (P) von Schalen (1) aus mindestens zwei seitlichen Trennern (3, 3') bestehen, die auf der einen und der anderen Seite des Stapels (P) angeordnet sind, die freie Enden aufweisen, die imstande sind, zwischen die ebenen Ränder von zwei aufeinanderfolgenden Schalen (1) zu gleiten und die von Motormitteln angetrieben werden, die dazu führen, dass die seitlichen Trenner (3, 3') sequentiell gemäß einer ersten Richtung senkrecht zur Achse des Stapels (P) und gemäß einer zweiten Bewegung, die dem oberen Teil (Ps) des Stapels (P) erlaubt, parallel zu der Achse verschoben zu sein, verschoben werden.

5. Vorrichtung zum Entstapeln von Schalen (1) nach einem der Ansprüche 3 und 4, **dadurch gekennzeichnet, dass** die bewegbare untere Unterlage (2, 2') aus mindestens zwei seitlichen Flügeln (2, 2') bestehen kann, die gleitend auf der einen und der anderen Seite des Stapels (P) angeordnet sind, auf deren freien Enden der Rand der untersten Schale (1') ruht, und die von Motormitteln in eine Richtung senkrecht zur Achse des Stapels (P) zwischen zwei jeweiligen Freigabeund Stützstellungen der letzten Schale (1') des Stapels (P) angetrieben werden.

6. Vorrichtung zum Entstapeln von Schalen (1) nach einem der Ansprüche 3 bis 5, **dadurch gekennzeichnet, dass** die mechanischen Mittel (4, 4') zum zeitlich vorübergehenden Halten der Schale (1) über der untersten Schale (1') des Stapels (P) aus mindestens zwei seitlichen Trennern (4, 4') bestehen, die gleitend auf der einen und der anderen Seite des Stapels (P) angeordnet sind, die von Motormitteln in eine Richtung senkrecht zur Achse des Stapels (P) zwischen zwei jeweiligen Freigabe- und Stützstellungen der Schale (1) über der untersten Schale (1') des Stapels (P) angetrieben werden.

7. Vorrichtung zum Entstapeln von Schalen (1) nach einem der Ansprüche 3 bis 6, **dadurch gekennzeichnet, dass** die seitlichen Trenner und Flügel aus Keilen (2, 2'; 4, 4') bestehen, die von Motormitteln angetrieben werden.

8. Vorrichtung zum Entstapeln von Schalen (1) nach einem der Ansprüche 3 bis 7, **dadurch gekennzeichnet, dass** die Mittel zum Einblasen von Luft aus zwei seitlichen Rohren bestehen, die jeweils Öffnungen aufweisen, die über dem Rand der untersten Schale (1') des Stapels (P) münden.

9. Vorrichtung zum Entstapeln von Schalen (1) nach einem der Ansprüche 3 bis 7, **dadurch gekennzeichnet, dass** die Mittel zum Einblasen von Luft aus Düsen bestehen, deren Positionierung in Abhängigkeit von der Form der Schalen (1) einstellbar ist.

10. Vorrichtung zum Entstapeln von Schalen (1) nach einem der Ansprüche 3 bis 7, **dadurch gekennzeichnet, dass** die Mittel zum Einblasen von Luft aus Zerstäubern bestehen, deren Positionierung in Abhängigkeit von der Form der Schalen (1) einstellbar ist.

11. Vorrichtung zum Entstapeln von Schalen (1) nach einem der Ansprüche 3 bis 10, **dadurch gekennzeichnet, dass** sie EDV-Mittel aufweist, die imstande sind, die Schwankung der Parameter der Luftströme vom Typ Druck, Richtung und Geschwindigkeit zu verwalten.

12. Vorrichtung zum Entstapeln von Schalen (1) nach einem der Ansprüche 3 bis 11, **dadurch gekennzeichnet, dass** der Stapel (P) von Schalen (1) von seitlichen Führungen vertikal gehalten wird.
